# NOUVEAU FASCICULE DE BREVET EUROPEEN

(11) **EP 0 227 497 B2**
(45) Date de publication et mention de la décision concernant l'opposition: **02.02.1994**
(45) Mention de la délivrance du brevet: 16.01.1991
(21) Numéro de dépôt: 86402272.8
(22) Date de dépôt: 13.10.1986
(51) Int. Cl.: G01V 5/00, G01T 3/08

(54) **Méthode de détection d'explosifs**
Verfahren zum Prüfen von Explosivstoffen
Method for detecting explosives

(30) Priorité: 18.10.1985 FR 8515474
(43) Date de publication de la demande: 01.07.1987
(73) Titulaire: COMMISSARIAT A L'ENERGIE ATOMIQUE, 75015 Paris Cédex 15 (FR)
(72) Inventeur: Grenier, Gérard, F-94450 Limeil-Brevannes (FR)
(74) Mandataire: Mongrédien, André

(56) Documents cités:
- EP-A- 7 759
- EP-A- 87 093
- FR-A- 2 201 765
- US-A- 3 146 349
- US-A- 3 748 472

## Description

La présente invention concerne un procédé de détection d'explosifs. Elle permet notamment un contrôle non destructif d'objets tels que les colis suspects pour savoir s'ils contiennent un explosif, en mesurant par exemple le rapport N/O de ces objets, rapport qui est une bonne signature de la plupart des explosifs.

Etant donné un objet susceptible de contenir un explosif, il importe de pouvoir mettre en oeuvre le procédé de détection près de l'objet pour contrôler celui-ci en vue de savoir s'il contient ou non l'explosif.

La présente invention a pour but de résoudre ce problème.

On connaît déjà, par le document EP-A-0 087 093, un dispositif d'analyse d'un courant de pétrole utilisant des neutrons thermiques. On connaît aussi, par le document EP-A-0 007 759, une technique de mesure de la teneur en eau du pétrole brut.

On connaît aussi par Physica Scripta, vol.4 1971 p.165 à 173 et par Nuclear Physics 14 (1959/60) p.295 à 213 des techniques d'identification de rayonnements γ produits par interaction inélastique de neutrons rapides avec des noyaux, et de mesure des sections efficaces correspondantes.

L'invention a pour objet un procédé de détection d'explosif conformément à la revendication 1.

On choisit l'énergie des neutrons au moins égale à environ 7 MeV pour pouvoir produire des photons γ prompts sur un élément léger tel que l'oxygène dont le premier niveau excité se situe à 6,130 MeV, de même que sur l'azote dont le niveau excité le plus important se situe à 5,106 MeV.

L'énergie des neutrons pourrait être choisie au-delà de 14 MeV mais les moyens de production de neutrons correspondants sont difficilement transportables.

Contrairement aux systèmes, notamment utilisés pour la prospection géologique, qui sont fondés sur la détection des photons γ de capture émis par des noyaux après capture des neutrons incidents ralentis par le milieu analysé, l'invention est findée sur la détection de rayonnements γ prompts, émis par l'objet sensiblement en coïncidence avec les neutrons incidents issus de leurs moyens de production et correspondant notamment à la diffusion inélastique de ces neutrons ou à des réactions nucléaires du genre (n, pγ), ce qui permet de placer le dispositif de l'invention à proximité de l'objet susceptible de contenir l'explosif pour contrôler cet objet.

L'utilisation, dans la présente invention, de neutrons rapides, d'énergie comprise entre environ 7 et 14 MeV, qui évitent l'utilisation d'un modérateur, permet d'accéder à des niveaux excités caractéristiques de certains éléments, niveaux inaccessibles par d'autres méthodes telles que celles qui utilisent des neutrons thermiques (ceux-ci ne permettant d'ailleurs pas de produire des photons γ prompts).

On peut ainsi comparer le pourcentage atomique relatif de l'azote et de l'oxygène dans l'objet à celui qui correspond à l'explosif pour savoir si l'objet contient cet explosif.

De préférence, l'énergie des neutrons est de l'ordre de 14 MeV. En effet, une source de neutrons d'environ 14 MeV est facile à utiliser et à transporter.

Dans un mode de réalisation préféré de l'invention, les bouffées de neutrons sont produites par un générateur de neutrons pulsé.

Un générateur continu pourrait être utilisé mais le rapport signal/bruit est meilleur avec un générateur pulsé.

Dans un mode de réalisation particulier de l'invention, le détecteur est un détecteur au germanium.

De préférence, le germanium est intrinsèque. En effet, contrairement à un détecteur au germanium dopé, par exemple au lithium, qui est détérioré s'il n'est pas conservé à une température au plus égale à la température de l'azote liquide, un détecteur au germanium intrinsèque peut être stocké à la température ambiante lorsqu'il n'est pas utilisé.

De préférence, le détecteur est séparé du générateur de neutrons par un écran qui protège ce détecteur des neutrons et va en s'évasant à partir du générateur, afin de ne pas augmenter le fond de rayonnement ambiant lors de l'émission des neutrons par leur générateur.

On utilise en outre avantageusement des moyens de refroidissement du détecteur afin que celui-ci puisse fonctionner le plus correctement possible.

Enfin, on peut également analyser un autre signal, correspondant aux photons γ de capture susceptibles d'être émis par l'objet sous l'impact des neutrons.

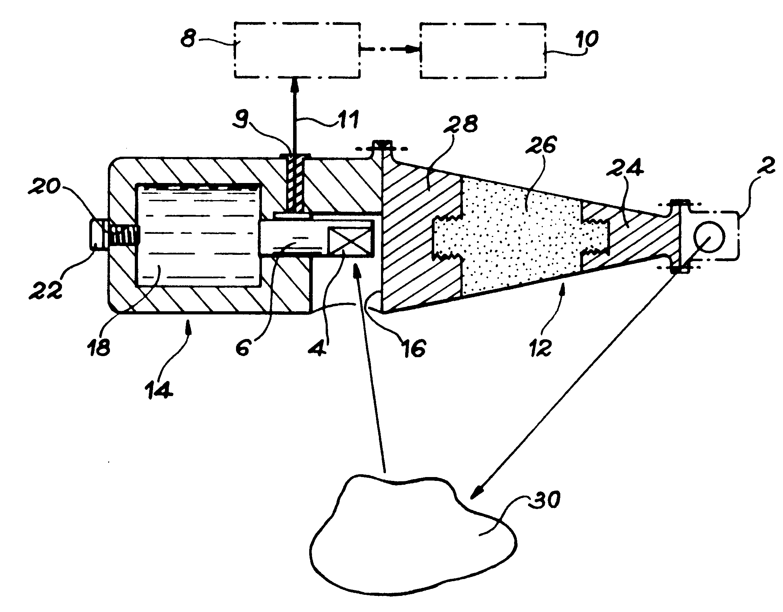

La présente invention sera mieux comprise à la lecture de la description qui suit d'un exemple de réalisation donné à titre purement indicatif et nullement limitatif, en référence à la figure unique annexée sur laquelle on a représenté schématiquement un mode de réalisation particulier d'un dispositif pour la mise en oeuvre d'un procédé conforme à l'invention.

Le dispositif représenté sur cette figure comprend : un générateur pulsé 2 de 14 MeV, du genre de ceux qui sont par exemple commercialisés par la Société SODERN et capables d'émettre des bouffées de neutrons dont on peut choisir la fréquence et la largeur tamporelle, et une chaîne de spectrométrie γ comprenant un détecteur 4 au germanium pour photons γ, un préamplificateur 6 couplé au détecteur, un amplificateur 8 relié au préamplificateur et un analyseur multi-canaux 10 relié à l'amplificateur.

L'ensemble formé par le détecteur 4 et le préamplificateur 6 est placé dans une enceinte destinée à protéger cet ensemble des neutrons directs issus du générateur 2 et du fond de rayonnement ambiant induit par ces neutrons. Cette enceinte comprend une partie 12 allant en s'évasant du générateur audit ensemble et par exemple de forme tronconique, et une autre partie 14 qui est par exemple de forme cylindrique, de même axe que la partie 12 et en contact avec la grande base de cette dernière par une extrémité, et qui contient le détecteur et le pré-amplificateur, une ouverture 9 étant prévue dans l'autre partie 14 pour le passage d'un câble électrique isolé 11 reliant le préamplificateur à l'amplificateur 8 qui est extérieur à l'enceinte. Une cavité 16 de forme allongée, jouant le rôle de collimateur, est pratiquée dans cette autre partie 14 perpendiculairement à l'axe commun aux parties 12 et 14 et débouche, d'un côté, sur le détecteur 4 et de l'autre, à l'extérieur de l'enceinte. Le collimateur a une section par exemple circulaire ou carrée et ses dimensions, qui définissent une ouverture angulaire pour le détecteur, sont choisies en fonction de la taille des objets que l'on souhaite examiner avec le dispositif.

Ce dispositif comprend également des moyens de refroidissement du détecteur 4 et du préamplificateur 6, par exemple constitués par un réservoir 18 placé dans l'autre partie 14, au contact du préamplificateur. Ce réservoir 18 est pourvu d'une ouverture de remplissage 20 qui traverse l'autre partie 14 pour déboucher à l'extérieur de celle-ci, par exemple à l'opposé de ladite partie 12, et qui est fermée par un bouchon 22. Le réservoir peut être conçu de façon à avoir une autonomie de 36 ou de 72 heures par exemple.

La partie tronconique 12 peut comprendre, en allant du générateur 2 au détecteur 4, une première pièce 24 en tungstène, une seconde pièce 26 en polyéthylène boré et une troisième pièce 28 également en tungstène, ces trois pièces étant fixées les unes aux autres et la troisième 28 étant fixée à l'autre partie 14 qui peut aussi être faite en tungstène.

On peut réaliser un dispositif démontable, ce qui facilite son transport, et peu encombrant. A cet effet, on peut prévoir des fixations démontabls du générateur à la pièce 24, de celle-ci à la pièce 26 et de cette dernière à l'autre partie 14, la pièce 26 étant par exemple vissée axialement aux pièces adjacentes 24 et 28.

Le dispositif est utilisé de la façon suivante : étant donné un objet 30 à contrôler pour savoir s'il contient un explositf, on apporte le dispositif (démonté) à proximité de l'objet et on le monte de façon que l'objet soit en regard du générateur 2 et du collimateur 16. On fait fonctionner le générateur et la chaîne de spectrométrie γ. Les bouffées de neutrons émis par le générateur interagissent avec l'objet 30 qui émet de ce fait divers photons γ et notamment des photons γ prompts qui interagissent à leur tour avec le détecteur 4. La chaîne de spectrométrie est réflée pour détecter les photons γ émis en quasi-coïncidence avec les bouffées de neutrons, c'est-à-dire les photons γ prompts.

Le spectre des photons γ prompts ainsi acquis par la chaîne de spectrométrie est alors affiché sur un écran (non représenté). On identifie les pics du spectre et, après calibration, les énergies de ces pics et enfin les éléments présents dans l'objet. On peut ainsi par exemple déterminer le rapport de l'aire du pic de l'azote à l'aide du pic de l'oxygène (si ces pics sont présents dans le spectre) et donc le rapport N/0 du nombre d'atomes d'azote au nombre d'atomes d'oxygène. En comparant ce rapport aux rapports N/O des divers explosifs connus, on peut savoir si l'objet contient ou non un explosif.

En fait, on connaît des chaînes de spectrométrie γ capabls d'afficher directement ce rapport N/O.

Bien d'autres éléments sont identifiables avec les γ prompts.

Il est également possible de faire l'acquisition des photons γ retardés, ou photons γ de capture, émis entre deux bouffées de neutrons successives, ce qui permet d'identifier l'élément chlore, présent dans certains explosifs et plus généralement des éléments présentant une production importante de photons γ de capture lorsque l'objet joue le rôle de ralentisseur.

L'accession au rapport N/O est permise du fait que les raies principales d'identification de l'azote et de l'oxygène ont des énergies voisines, d'où une auto-absorption identique. L'invention permet de déterminer ce rapport N/O assez rapidement, en un temps de l'ordre de 40 à 50 minutes.

La production de neutrons dont l'énergie est comprise entre environ 7 et 14 MeV peut être obtenue au moyen d'un générateur de neutrons d'environ 14 MeV, associé à un convertisseur d'énergie approprié et connu, apte à fournir ces neutrons d'énergie comprise entre environ 7 et 14 MeV.

## Revendications

1. Procédé de détection d'un explosif susceptible d'être contenu dans un objet (30), caractérisé en ce qu'on irradie l'objet au moyen de bouffées de neutrons rapides, ces neutrons rapides ayant une énergie comprise entre 7 et 14 MeV, on détecte les photons γ prompts émis en coïncidence avec les bouffées de neutrons et ayant une énergie de 5,106 MeV caractérisant l'azote et les photons γ prompts émis en coïncidence avec les bouffées de neutrons et ayant une énergie de 6,130 MeV caractérisant l'oxygène, on détermine le pourcentage atomique relatif de l'azote et l'oxygène dans l'objet au moyen des photons de 5,106 MeV et 6,130 MeV détectés, et on compare ce pourcentage aux rapports N/O d'explosifs connus.

2. Procédé selon la revendication 1, caractérisé en ce que les photons γ prompts sont détectés au moyen d'une chaîne de spectrométrie comportant un détecteur au germanium.

3. Procédé selon la revendication 2, caractérisé en ce que le germanium est intrinsèque.

4. Procédé selon la revendication 1, caractérisé en ce que l'énergie des neutrons est de l'ordre de 14 MeV.

5. Procédé selon la revendication 1, caractérisé en ce que les bouffées de neutrons sont produites par un générateur de neutrons pulsé et en ce que les photons γ prompts sont détectés au moyen d'une chaîne de spectrométrie γ comportant un détecteur de photons γ qui est séparé du générateur de neutrons par un écran qui protège ce détecteur des neutrons et va en s'évasant à partir du générateur de neutrons.

6. Procédé selon la revendication 1, caractérisé en ce que les photons γ prompts sont détectés au moyen d'un chaîne de spectrométrie γ comporant un détecteur de photons γ muni de moyens de refroidissement de ce détecteur.

7. Procédé selon la revendication 1, caractérisé en ce qu'on détecte en outre des photons γ de capture susceptibles d'être émis par l'objet sous l'impact des neutrons.

## Patentansprüche

1. Verfahren zum Nachweis von Explosivstoff, der in einem Objekt (30) enthalten sein kann, dadurch gekennzeichnet, daß man das Objekt mit Hilfe von Pulsen schneller Neutronen bestrahlt, wobei diese schnellen Neutronen eine Energie zwischen 7 und 14 MeV haben, daß man die prompten γ-Photonen, die in Koinzidenz mit den Neutronenpulsen ausgesendet werden und eine für den Stickstoff charakteristische Energie von 5,106 MeV haben, und die prompten γ-Photonen, die in Koinzidenz mit den Neutronenpulsen ausgesendet werden und eine für den Sauerstoff charakteristische Energie von 6,130 MeV haben, detektiert, daß man mittels der detektierten Photonen von 5,106 MeV und 6,130 MeV den relativen Atomanteil des Stickstoffs und des Sauerstoffs in dem Objekt bestimmt und daß man diesen Anteil mit den N/C-Verhältnissen bekannter Explosivstoffe vergleicht.

2. Verfahren nach Anspruch 1, dadurch gekennzeichnet, daß die γ-Photonen mittels eines Spektrometersystems detektiert werden, das einen Germaniumdetektor umfaßt.

3. Verfahren nach Anspruch 2, dadurch gekennzeichnet, daß das Germanium hochrein ist.

4. Verfahren nach Anspruch 1, dadurch gekennzeichnet, daß die Energie der Neutronen von der Größenordnung 14 MeV ist.

5. Verfahren nach Anspruch 1, dadurch gekennzeichnet, daß die Neutronenpulse von einem gepulsten Neutronengenerator erzeugt werden, und dadurch, daß die prompten γ-Photonen mittels eines γ-Spektrometersystems detektiert werden, das einen Detektor für γ-Photonen umfaßt, der von dem Neutronengenerator durch eine Abschirmung getrennt ist, welche den Detektor vor den Neutronen schützt und sich, ausgehend von dem Neutronengenerator, erweitert.

6. Verfahren nach Anspruch 1, dadurch gekennzeichnet, daß die prompten γ-Photonen mittels eines γ-Spektrometersystems detektiert werden, das einen Detektor für γ-Photonen umfaßt, der mit Einrichtungen zu seiner Kühlung versehen ist.

7. Verfahren nach Anspruch 1, dadurch gekennzeichnet, daß man ferner Einfang-γ-Photonen detektiert, die möglicher- weise von dem Objekt unter der Einwirkung der Neutronen emittiert werden.

## Claims

1. Process for the detection of an explosive liable to be contained in an object (30), characterized in that said object is irradiated by means of fast neutron bursts, said fast neutrons having an energy between 7 and 14 MeV, the fast gamma photons emitted in coincidence with the neutron bursts are detected and which have an energy of 5.106 MeV characterizing nitrogen and the fast gamma photons emitted in coincidence with the neutron bursts and having an energy of 6.130 MeV characterizing oxygen, the relative atomic percentage of the nitrogen and oxygen in the object is determined by means of the detected photons of 5.106 and 6.130 MeV and said percentage is compared with the N/O ratios of known explosives.

2. Process according to claim 1, characterized in that the fast gamma photons are detected by means of a spectrometry chain having a germanium detector.

3. Process according to claim 2, characterized in that the germanium is intrinsic.

4. Process according to claim 1, characterized in that the energy of the neutrons is approximately 14 MeV.

5. Process according to claim 1, characterized in that the neutron bursts are produced by a pulsed neutron generator and in that the fast gamma photons are detected by means of a gamma spectrometry chain having a gamma photon detector separated from the neutron generator by a screen, which protects said detector from the neutron and widens from the neutron generator.

6. Process according to claim 1, characterized in that the fast gamma photons are detected by a gamma spectrometry chain having a gamma photon detector provided with means for cooling said detector.

7. Process according to claim 1, characterized in that detection also takes place of trapping gamma photons which can be emitted by the object under the impact of the neutrons.
